(19) Europäisches Patentamt
European Patent Office
Office européen des brevets

(11) **EP 2 013 594 B1**

(12) **EUROPEAN PATENT SPECIFICATION**

(45) Date of publication and mention
of the grant of the patent:
**16.11.2016  Bulletin 2016/46**

(51) Int Cl.:
***G01N 21/19*** *(2006.01)*   ***G01M 11/02*** *(2006.01)*

(21) Application number: **07783044.6**

(86) International application number:
**PCT/US2007/067949**

(22) Date of filing: **01.05.2007**

(87) International publication number:
**WO 2007/130990 (15.11.2007 Gazette 2007/46)**

(54) **MEASUREMENT OF LINEAR AND CIRCULAR DIATTENUATION IN OPTICAL ELEMENTS**

MESSUNG DER LINEAREN UND DER ZIRKULÄREN DIATTENUATION IN OPTISCHEN ELEMENTEN

MESURE DE DIATTÉNUATION LINÉAIRE ET CIRCULAIRE DANS DES ÉLÉMENTS OPTIQUES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.05.2006  US 746167 P**

(43) Date of publication of application:
**14.01.2009  Bulletin 2009/03**

(73) Proprietor: **Hinds Instruments, Inc.
Hillsboro, OR 97124 (US)**

(72) Inventor: **WANG, Baoliang
Beaverton, OR 97006 (US)**

(74) Representative: **Beattie, Alex Thomas Stewart et al
Forresters
Skygarden
Erika-Mann-Strasse 11
80636 München (DE)**

(56) References cited:
**US-A- 5 504 581     US-A1- 2003 179 375
US-A1- 2003 227 622     US-A1- 2004 008 348
US-A1- 2004 075 834     US-A1- 2004 156 051
US-A1- 2005 068 531**

- **CHENAULT D B ET AL: "Measurements of linear diattenuation and linear retardance spectra with a rotating sample spectropolarimeter" APPLIED OPTICS USA, vol. 32, no. 19, 1 July 1993 (1993-07-01), pages 3513-3519, XP002521095 ISSN: 0003-6935**
- **MCGUIRE J P JR ET AL: "Polarization aberrations. 1. Rotationally symmetric optical systems" APPLIED OPTICS USA, vol. 33, no. 22, 1 August 1994 (1994-08-01), pages 5080-5100, XP002521096 ISSN: 0003-6935**

**Description**

**Technical Field**

This application relates to precise measurement of linear and circular diattenuation in optical elements.

**Background and Summary**

Many optical elements display a property known as diattenuation, whereby the intensity transmittance of a beam that exits an optical element or sample is a function of the polarization state of the incident beam. The intensity transmittance is a maximum $T_{max}$ for one polarization state of the incident beam, and a minimum $T_{min}$ for the orthogonal polarization state for that beam.

Linear diattenuation needs two parameters to describe it: (1) angle $\theta$ which is the angle of the maximum transmission axis for linearly polarized light; and (2) magnitude $L_d$, which is defined as $(T_{max} - T_{min})/(T_{max} + T_{min})$.

US 2003/227622 discloses a method for automating measurement of an optical property of a sample, including selecting a measurement aperture around a reference point on the sample, generating a set of grid nodes that fall within the measurement aperture, calculating the radial distance of each node with respect to a reference point within the measurement aperture, and calculating the angular position of each node with respect to the vertical. The method also includes moving a light source and a light detector along the vertical and rotating the sample to measurement positions in which the light source and the light detector are aligned with one of the nodes in the measurement aperture, and measuring the optical property at the measurement position by energizing the light source and interrogating the detector.; The calculated radial distances and angular positions are used to control positioning of the light source and the light detector and rotation of the sample.

Chenault D B et al: "Measurements of linear diattenuation and linear retardance spectra with a rotating sample spectropolarimeter" Applied Optics USA, vol. 32, no. 19, 1 July 1993 (1993-07-01) discloses a technique for measuring linear diattenuation and retardance spectra in which a sample is rotated between two stationary polarisers in the sample compartment of a Fourier transform infrared spectrometer.

US5,504,581 discloses a system in which a phase plate is superposed on a sample, and this phase plate is so adjusted that the phase difference of the total retardation of the sample and the phase plate is integral times $2\pi$ with respect to a measuring beam of a first wavelength, so that retardation can be correctly measured even if an order is increased. In this state, a measuring beam of a second wavelength which is approximate to the first wavelength is employed and two polarizing plates maintaining polarizing directions in parallel nicol relation are singularly rotated with respect to the sample which is arranged therebetween. The ratio lm/lo between maximum value lo and minimum value lm of currently transmitted light intensity is applied to a previously prepared relation between the order n of retardation and this ratio lm/lo to derive the order of retardation of the sample, to thereafter obtain correct retardation.

US 2004/0075834 discloses systems and methods for precisely measuring birefringence properties of large-format samples of optical elements. A gantry-like configuration is employed for precise movement of birefringence measurement system components relative to the sample. This document also discloses an effective large-format sample holder that adequately supports the sample to prevent induced birefringence therein while still presenting a large area of the sample to the unhindered passage of light.

Mcguire J P JR et al: "Polarization aberrations. 1. Rotationally symmetric optical systems" Applied Optics USA, vol. 33, no. 22, 1 August 1994 (1994-08-01) discloses a system for examining the polarisation in isotropic radially symmetric lenses and mirror systems in the paraxial approximation.

US 2003/179375 discloses a system and method for precisely measuring low-level linear and circular birefringence properties (retardance and direction) of optical materials. The system incorporates a photoelastic modulator for modulating polarized light that is then directed through a sample. The beam ("Bi") propagating from the sample is separated into two parts, with one part ("B1") having a polarization direction different than the polarization direction of the other beam part ("B2"). These separate beam parts are then processed as distinct channels. Detection mechanisms associated with each channel detect the time varying light intensity corresponding to each of the two parts of the beam. This information is combined for calculating a precise measure of the linear and/or circular retardance induced by the sample, as well as the sample's fast axis orientation and direction of circular retardance.

US 2005/068531 discloses systems and methods of measuring birefringence or retardation. For some embodiments, a system is provided, which comprises a polarizer, an analyzer, a first waveplate, and a second waveplate. The system is configured to obtain light intensity measurements by recursively rotating the second waveplate. The obtained light intensity measurements are retrieved, and a light transmission intensity curve is determined from the light intensity measurements.

US 2004/156051 discloses a birefringence measuring apparatus and method for measuring birefringence of a sample in a reduced time and in a simple manner. The birefringence measuring apparatus includes a light projecting unit for projecting approximately circularly polarized light upon a sample, a Stokes meter for detecting a state of polarization of light from the sample, and a calculating system for calculating birefringence of the sample on the basis of a Stokes parameter from the Stokes meter.

What follows is a description of a system for measuring, in addition to linear birefringence of an optical element, the linear and circular diattenuation properties of that element.

Brief Description of Drawing

Fig. 1 is a diagram of one embodiment of the instrumentation used with the present invention, including a light source module, an optical element or sample, and a detector module.

Fig. 2 is a block diagram of a preferred version of a light source module.

Fig. 3 is a diagram for illustrating motion controllers used with the instrument.

Fig. 4 is a diagram showing the use of visible laser light as a guide for the actual beam used in the measurement calculations.

Fig. 5 is diagram illustrating a variable aperture for use in a detector module in instances where the source light beam collimation is modified by the sample.

Fig. 6 is a diagram showing the use of a re-collimating lens and fixed aperture for use in a detector module in instances where the light beam collimation is modified by the sample.

Description of Preferred Embodiments

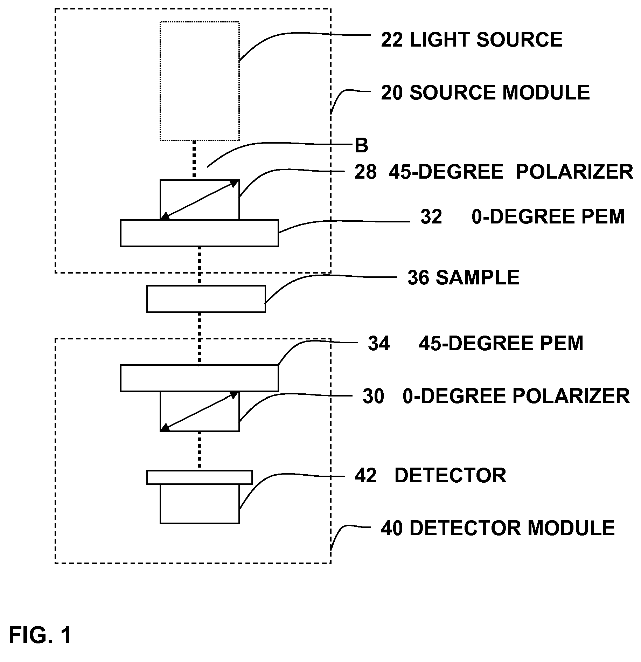

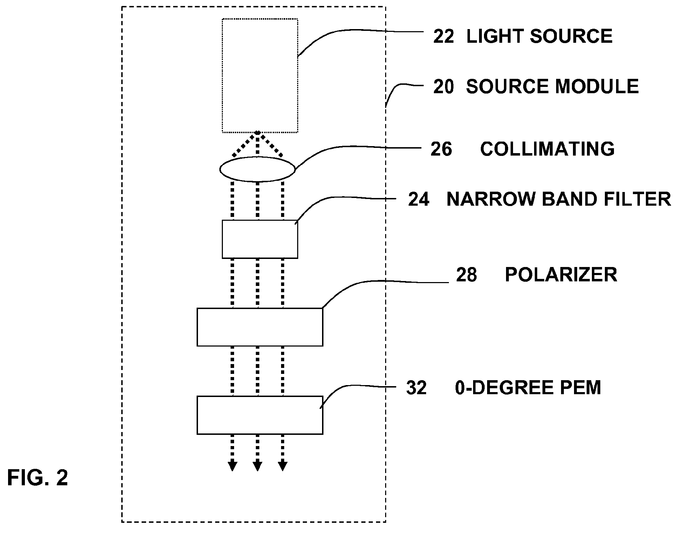

One preferred embodiment of the present invention includes (see Figs. 1 and 2) a light source module 20 that contains a deuterium lamp 22 (30 W), a wavelength selecting device 24 (narrow band filter) and light collimating lenses 26.

Polarizers, such as Rochon polarizers are located in the source module 20 and detector module 40 as shown. The source module polarizer 28 is oriented at 45 degrees, and the detector module polarizer 30 is oriented at 0 degrees.

A photoelastic modulator (PEM) 32 is located in the source module with its optic axis at 0 degrees. The PEM 32 modulates the polarization of the source light beam "B." A second PEM 34 is in the path of the beam "B" and is oriented at 45 degrees. The optical element of interest (hereafter sample 36) is located between the source and detector modules, hence between the two PEMs 32, 34. The two PEMs have different frequencies (for example, 50 KHz and 60 KHz, respectively).

The detector 42 may be a photomultiplier tube (PMT).

The instrument illustrated in Fig. 1 is essentially a polarimeter specifically designed for determining linear retardation (both magnitude and angle of fast axis) linear diattenuation (both magnitude and angle of maximum transmission axis) circular retardation and circular diattenuation in a sample. To measure both the birefringence and diattenuation of a sample, only one optical configuration, as shown in Fig. 1, is required. There is no need to rotate the source and detector modules or associated optical components.

The results of theoretical analysis using Mueller matrices for the dual PEM-single detector configuration shown in Fig. 1 are provided next.

The variables $\delta 1$ and $\delta 2$ are the time varying phase retardation of the respective PEMs 32, 34 ($\delta 1 = \delta 1_o \sin \omega_1 t$ and $\delta 2 = \delta 2_o \sin \omega_2 t$); and

$\omega_1$ and $\omega_2$ are the PEM modulating frequencies of the respective PEMs 32, 34; and $\delta 1_o$ and $\delta 2_o$ being the peak retardation amplitudes of the respective PEMs 32, 34.

If the sample exhibits both linear retardation and linear diattenuation, the corresponding DC signal at the detector 42, while $\delta 1_0 = \delta 2_0 = 2.405$ radians (0.3828 waves), is:

$$V_{DC} = \frac{KI_0}{2} \qquad \text{Eqn. (1).}$$

The useful AC terms for determining linear retardation (both magnitude and angle) and linear diattenuation (both magnitude and angle) in a sample can be obtained using the Bessel function expansions:

$$\sin \delta 1 = \sin(\delta 1_0 \sin(\omega_1 t)) = \sum_{2k+1} 2J_{2k+1}(\delta 1_0) \sin((2k+1)\omega_1 t) \qquad \text{Eqn. (2)}$$

$$\cos \delta 1 = \cos(\delta 1_0 \sin(\omega_1 t)) = J_0(\delta 1_0) + \sum_{2k} 2J_{2k}(\delta 1_0) \cos((2k)\omega_1 t) \qquad \text{Eqn. (3)}$$

and similar expansions of $\sin\delta 2$ and $\cos\delta 2$, where k is either "0" or a positive integer that represent the order of the Bessel function.

For measuring linear birefringence below a quarter of the wavelength of the light source, the useful terms are the $(2\omega_1 + \omega_2)$ and $(\omega_1 + 2\omega_2)$ terms:

$$V_{2\omega_1 + \omega_2} = \frac{KI_0}{2} 2J_2(\delta 1_0) \cdot 2J_1(\delta 2_0) \cos(2\rho) \sin \delta \qquad \text{Eqn. (4.1)}$$

$$V_{2\omega_2 + \omega_1} = \frac{KI_0}{2} 2J_2(\delta 2_0) \cdot 2J_1(\delta 1_0) \sin(2\rho) \sin \delta \qquad \text{Eqn. (4.2)}$$

In order to eliminate the effect of light intensity variations due to light source fluctuations and the absorption, reflection and scattering from the sample and other optical components, the ratios of the AC signals to the DC signal are used. The ratios of AC signals to the DC signal for the $(2\omega_1 + \omega_2)$ and $(\omega_1 + 2\omega_2)$ terms are represented in equations (5.1) and (5.2):

$$\frac{V_{2\omega_1 + \omega_2}}{V_{DC}} = 2J_2(\delta 1_0) \cdot 2J_1(\delta 2_0) \cos(2\rho) \sin \delta \qquad \text{Eqn. (5.1)}$$

$$\frac{V_{2\omega_2 + \omega_1}}{V_{DC}} = 2J_2(\delta 2_0) \cdot 2J_1(\delta 1_0) \sin(2\rho) \sin \delta \qquad \text{Eqn. (5.2)}$$

Defining $R_1$ and $R_2$ as corrected ratios, equations (5.1) and (5.2) become:

$$\frac{V_{2\omega_1 + \omega_2}}{V_{DC}} \frac{1}{2J_2(\delta 1_0) \cdot 2J_1(\delta 2_0)} = R_1 = \cos(2\rho) \sin \delta \qquad \text{Eqn. (6.1)}$$

$$\frac{V_{2\omega_2 + \omega_1}}{V_{DC}} \frac{1}{2J_2(\delta 2_0) \cdot 2J_1(\delta 1_0)} = R_2 = \sin(2\rho) \sin \delta \qquad \text{Eqn. (6.2)}$$

Rearranging equations (6.1) and (6.2), we can express the retardation magnitude and angle of fast axis of the sample as:

$$\rho = \frac{1}{2}\tan^{-1}\left[\frac{R_2}{R_1}\right] \quad or \quad \rho = \frac{1}{2}ctg^{-1}\left[\frac{R_1}{R_2}\right] \qquad \text{Eqn. (7.1) \& (7.2)}$$

$$\delta = \arcsin\sqrt{(R_1)^2 + (R_2)^2}$$

where $\delta$, represented in radians, is a scalar. When measured at a specific wavelength (i.e. 193 nm), it can be converted to retardation in "nm" ($\omega_{nm} = \delta_{rad}\cdot 193/(2\pi)$).

For measuring linear diattenuation, the useful terms are the $2\omega 1$ and $2\omega 2$ terms:

$$V_{2\omega_1} = \frac{KI_0}{2}2J_2(\delta 1_0)\cdot Ld\cdot\sin(2\theta) \qquad \text{Eqn. (8.1)}$$

$$V_{2\omega_2} = \frac{KI_0}{2}2J_2(\delta 2_0)\cdot Ld\cdot\cos(2\theta) \qquad \text{Eqn. (8.2)}$$

where $\theta$ is the angle of the maximum transmission axis for linearly polarized light, Ld is defined as $(T_{max} - T_{min})/(T_{max} + T_{min})$, where $T_{max}$ and $T_{min}$ are the maximum and minimum intensities of transmission for linearly polarized light.

The ratios of the AC signals to the DC signal are:

$$\frac{V_{2\omega_1}}{V_{DC}} = 2J_2(\delta 1_0)\cdot Ld\cdot\sin(2\theta) \qquad \text{Eqn. (9.1)}$$

$$\frac{V_{2\omega_2}}{V_{DC}} = 2J_2(\delta 2_0)\cdot Ld\cdot\cos(2\theta) \qquad \text{Eqn. (9.2)}$$

Defining $LR_1$ and $LR_2$ as corrected ratios for linear diattenuation, we have:

$$\frac{V_{2\omega_1}}{V_{DC}\cdot 2J_2(\delta 1_0)} = LR_1 = Ld\cdot\sin(2\theta) \qquad \text{Eqn. (10.1)}$$

$$\frac{V_{2\omega_2}}{V_{DC}\cdot 2J_2(\delta 2_0)} = LR_2 = Ld\cdot\cos(2\theta) \qquad \text{Eqn. (10.2)}$$

Rearranging equations (10.1) and (10.2), we can express the retardation magnitude and angle of fast axis of the sample as:

$$\theta = \frac{1}{2}\tan^{-1}\left[\frac{LR_1}{LR_2}\right] \qquad \text{Eqn. (11.1)}$$

$$Ld = \sqrt{\left(LR_1\right)^2 + \left(LR_2\right)^2} \qquad \text{Eqn. (11.2)}$$

For measuring circular diattenuation, the useful terms are the $\omega_1$ and $\omega_2$ terms:

$$V_{\omega_1} = \frac{KI_0}{2}2J_1(\delta 1_0)\cdot Cd \qquad \text{Eqn. (12.1)}$$

$$V_{\omega_2} = \frac{KI_0}{2}2J_1(\delta 2_0)\cdot Cd \qquad \text{Eqn. (12.2)}$$

where the circular diattenuation (Cd) is defined as $(T_{RCP} - T_{LCP})/(T_{RCP} + T_{LCP})$, where $T_{RCP}$ and $T_{LCP}$ are the intensities of transmission for right and left circularly polarized light, respectively.
The ratios of the AC signals to the DC signal are:

$$\frac{V_{\omega_1}}{V_{DC}} = 2J_1(\delta 1_0)\cdot Cd \qquad \text{Eqn. (13.1)}$$

$$\frac{V_{\omega_2}}{V_{DC}} = 2J_1(\delta 2_0)\cdot Cd \qquad \text{Eqn. (13.2)}$$

or

$$Cd = \frac{V_{\omega_2}}{V_{DC}\,2J_1(\delta 2_0)} = \frac{V_{\omega_1}}{V_{DC}\,2J_1(\delta 1_0)} \qquad \text{Eqn. (14.1)}$$

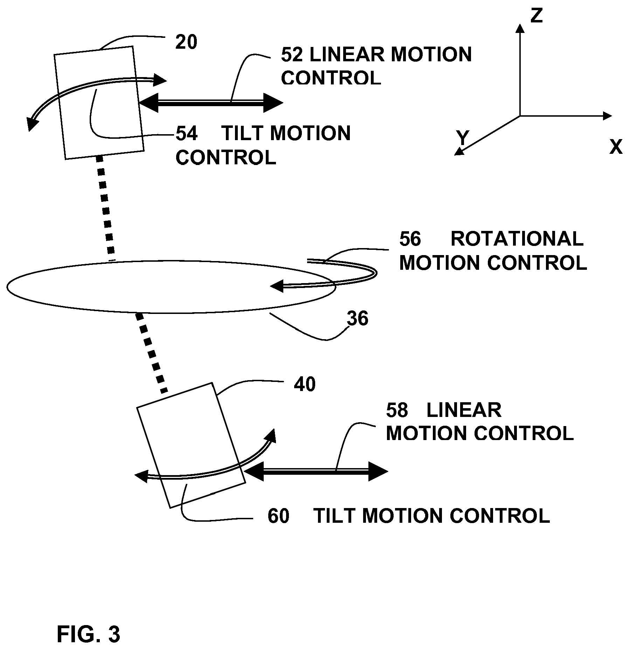

This instrument also provides the measurements of circular brief (optical rotation). Turning to a preferred implementation of the present invention, wavelength selection can be performed using a narrow band optical filter 24 (Fig. 2) (e.g. 193 nm) instead of a monochromator. This minimizes the size and weight of the source module 20 and optimize light delivery but possibly limit the wavelength resolution. Alternatively, one may use a simplified monochromator (grating at a fixed position) for selecting 193 nm light only.
The system of the present invention also includes semi-automated system with software MACROs to reduce motion complexity. Five motion controls are employed (Fig. 3). The source module includes a linear translation stage 52 and a tilt stage 54. The sample 36 (in this instance, a lens of varying power and thickness) includes a rotation stage 56. The detector module includes a linear translation stage 58 and a tilt stage 60. Accordingly, the system includes five motion controllers.

The operation of the system (reference Fig. 3) includes the steps of

- manually generate measurement coordinates of the five motion controls for the first sample 36;
- manually align source module 20 to the sample (eg, a lens) by adjusting linear motion control 52 and tilting motion control 54;
- manually align detector module 40 to receive optimized light intensity by adjusting linear motion control 58 and tilting motion control 60;
- Due to the symmetry of the lens sample, once the coordinates of linear motion control 52, tilting control 54, linear motion control 58 and tilting control 60 are chosen, all coordinates of the remaining (sample) rotational control 56 can be generated by rotating the lens sample one full turn; (Alternatively, the sample could be held stationary and the modules 20, 40 rotated instead.)
- Create software instructions (MACRO) based on the manually generated coordinates
- Use MACRO for automation in subsequent measurements of the same type of lenses.

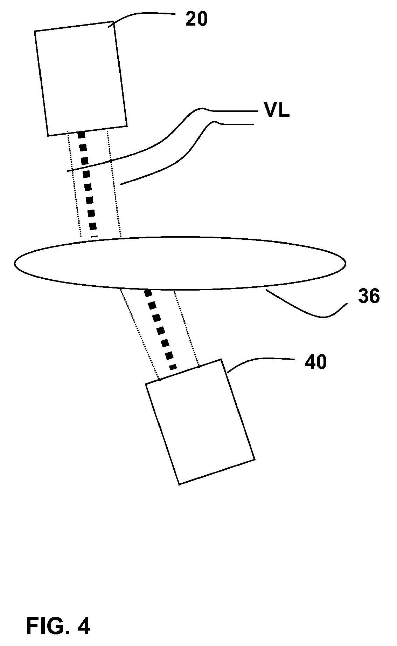

The aligning steps noted above can be assisted by using two or more visible lasers as guides as shown at "VL" in Fig. 4. The lines inside of the visible laser light "VL" enclose the source light beam, which may have a wavelength of 193 nanometers, and is difficult to observe with the naked eye.

Finer motion control, if needed, can be included on one of the modules to get optimal light intensity delivery.

The advantages of using PEMs for lens measurement system include a large useful aperture and acceptance angle.

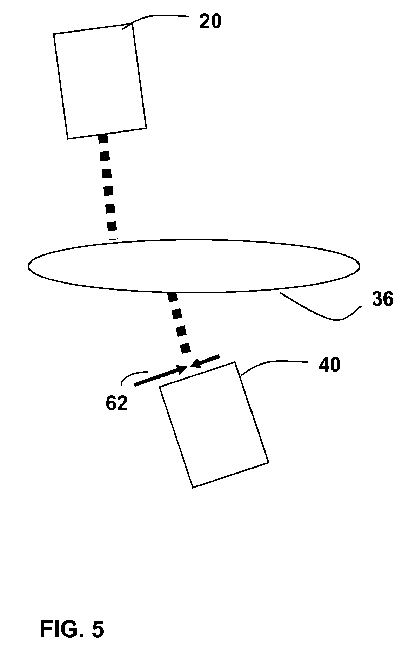

As respects the treatment of a non-collimated beam exiting the (lens) sample 36 one could use aperture diameter control 62 (represented by the opposed arrows in Fig. 5), which, like the motion controllers discussed above, may be computer controlled. The diameter of the aperture is related to the amount of convergence or divergence of the light beam introduced by the sample 36, which, as noted can be a lens of varying optical power.

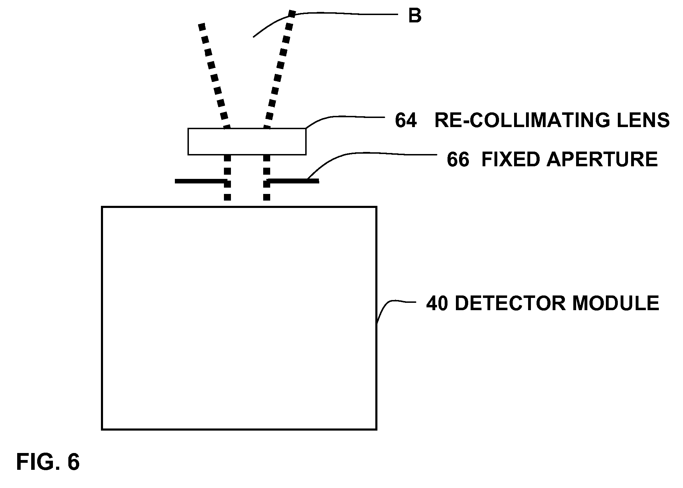

Alternatively, one could use a re-collimating lens 64 and a fixed aperture 66 in front of active area of the detector (see Fig. 6). The focused or diverged beam B emanating from the sample lens under measurement is directed to that re-collimating lens 64 before passing through the fixed aperture 66.

While the present invention has been described in terms of preferred embodiments, it will be appreciated by one of ordinary skill in the art that modifications may be made without departing from the teachings and spirit of the foregoing.

## Claims

1. A system for measuring diattenuation in an optical element comprising:

   a rotatable sample rotation stage (56) for securing an optical element sample (36) and for controlled rotation of the sample (36);
   a light source module (20) for generating a source light beam (B);
   a detector module (40); the light source module (20) and detector module (40) being arranged with the sample rotation stage (56) between them, thereby permitting the source light beam (B) to propagate through a sample (36), when a sample is secured in the sample stage (56), and to the detector module (40);
   linear motion means (52, 58) for controlled linear motion of the light source module (20) and for controlled linear motion of the detector module (40); and
   a first tilt stage (54) for controlled tilt of the light source module (20) and a second tilt stage (60) for controlled tilt of the detector module (40), thereby to facilitate detection, by the detector module (40), of light intensity information corresponding to the diattenuation of the optical sample (36).

2. The system of claim 1 wherein the light source module (20) and the detector module (40) each include a photoelastic modulator (PEM).

3. The system of claim 1 wherein the light source module (20) is configured to generate in addition to the source light beam (B) an alignment beam (VL) of visible light thereby to facilitate alignment of the light source module (20) and the detector module (40).

4. The system of claim 3 wherein the light source beam (B) has a wavelength of about 193 nanometers.

5. The system of claim 1 including a sample (36) having a varying thickness that causes the source light beam (B) to converge, and wherein the detector module (40) includes an active area for receiving light; and
aperture means (66) associated with the detector module (40) for effectively changing the active area of the detector module (40) by an amount related to the amount of convergence caused by the sample (36).

6. The system of claim 1 including a sample (36) having a varying thickness that causes the source light beam (B) to diverge, and wherein the detector module (40) includes an active area for receiving light; and
aperture means (66) associated with the detector module (40) for effectively changing the active area of the detector module (40) by an amount related to the amount of divergence caused by the sample (36).

7. The system of claim 1 including a sample (36) having a varying thickness; and wherein the detector module (40) includes an active area for receiving light; and
aperture means (66) associated with the detector module (40) for effectively changing the active area of the detector module (40).

8. The system of claim 1 including a sample (36) having a varying thickness; and wherein the detector module includes an active area for receiving light; and
a collimating lens (64) disposed between the sample (36) and the active area of the detector module (40).

9. The system of claim 1 wherein the light source beam (B) is polarized and the light intensity information corresponds to the circular diattenuation of the optical sample (36).

10. A method of measuring diattenuation in an optical element comprising the steps of:

securing an optical element sample (36) in a rotatable stage (56);
generating a polarized source light beam (B), including translating the source light beam (B) using first linear motion means (52) and tilting the source light beam (B) using a first tilt stage (54);
directing the source beam (B) through the sample (36), including rotating the sample (36) using the rotatable stage (56);
arranging the active area of a detector (42) to detect the source light beam (B) after it propagates through the sample (36), including translating the detector (42) using second linear motion means (58) and tilting the detector (42) using a second tilt stage (60); and
determining from the detected source light information corresponding to the diattenuation of the optical sample (36) secured in the sample stage (56).

11. The method of claim 10 wherein the arranging step includes the step of generating in addition to the source light beam (B) an alignment beam (VL) of visible light thereby to facilitate alignment of the source light beam (B) and the detector (42).

12. The method of claim 10 wherein the arranging step includes the step of collimating the source light beam (B) after it propagates through the sample (36).

13. The method of claim 10 wherein the determining step includes determining the circular diattenuation of the optical sample (36).

**Patentansprüche**

1. System zur Messung der Diattenuation in einem optischen Element, umfassend:

einen drehbaren Probendrehtisch (56) zur Sicherung einer optischen Elementprobe (36) und zur kontrollierten Drehung der Probe (36);
ein Lichtquellenmodul (20) zur Erzeugung eines Quellenlichtstrahls (B);
ein Detektormodul (40); wobei das Lichtquellenmodul (20) und Detektormodul (40) mit dem Probendrehtisch (56) zwischen ihnen angeordnet sind, wodurch sich der Quellenlichtstrahl (B) durch eine Probe (36) hindurch, wenn eine Probe im Probentisch (56) gesichert ist, und zum Detektormodul (40) ausbreiten kann;
Linearbewegungsmittel (52, 58) zur kontrollierten Linearbewegung des Lichtquellenmoduls (20) und zur kontrollierten Linearbewegung des Detektormoduls (40); und

einen ersten Neigungstisch (54) zur kontrollierten Neigung des Lichtquellenmoduls (20) und einen zweiten Neigungstisch (60) zur kontrollierten Neigung des Detektormoduls (40), um dadurch die Detektion, durch das Detektormodul (40), von Lichtstärkeninformationen entsprechend der Diattenuation der optischen Probe (36) zu ermöglichen.

2. System nach Anspruch 1, worin das Lichtquellenmodul (20) und das Detektormodul (40) jeweils einen photoelastischen Modulator (PEM) beinhalten.

3. System nach Anspruch 1, worin das Lichtquellenmodul (20) dafür konfiguriert ist, zusätzlich zum Quellenlichtstrahl (B) einen Ausrichtungsstrahl (VL) von sichtbarem Licht zu erzeugen, um dadurch die Ausrichtung des Lichtquellenmoduls (20) und des Detektormoduls (40) zu ermöglichen.

4. System nach Anspruch 3, worin der Lichtquellenstrahl (B) eine Wellenlänge von etwa 193 Nanometer aufweist.

5. System nach Anspruch 1 einschließlich einer Probe (36) mit einer variierenden Dicke, die bewirkt, dass der Quellenlichtstrahl (B) konvergiert, und worin das Detektormodul (40) einen aktiven Bereich zum Empfangen von Licht beinhaltet; und
Öffnungsmittel (66), das mit dem Detektormodul (40) assoziiert ist, zum effektiven Ändern des aktiven Bereichs des Detektormoduls (40) um einen Betrag, der mit dem von der Probe (36) bewirkten Konvergenzbetrag zusammenhängt.

6. System nach Anspruch 1 einschließlich einer Probe (36) mit einer variierenden Dicke, die bewirkt, dass der Quellenlichtstrahl (B) divergiert, und worin das Detektormodul (40) einen aktiven Bereich zum Empfangen von Licht beinhaltet; und
Öffnungsmittel (66), das mit dem Detektormodul (40) assoziiert ist, zum effektiven Ändern des aktiven Bereichs des Detektormoduls (40) um einen Betrag, der mit dem von der Probe (36) bewirkten Divergenzbetrag zusammenhängt.

7. System nach Anspruch 1 einschließlich einer Probe (36) mit einer variierenden Dicke; und worin das Detektormodul (40) einen aktiven Bereich zum Empfangen von Licht beinhaltet; und
Öffnungsmittel (66), das mit dem Detektormodul (40) assoziiert ist, zum effektiven Ändern des aktiven Bereichs des Detektormoduls (40).

8. System nach Anspruch 1 einschließlich einer Probe (36) mit einer variierenden Dicke; und worin das Detektormodul einen aktiven Bereich zum Empfangen von Licht beinhaltet; und
einer Kollimationslinse (64), die zwischen der Probe (36) und dem aktiven Bereich des Detektormoduls (40) angeordnet ist.

9. System nach Anspruch 1, worin der Lichtquellenstrahl (B) polarisiert ist und die Lichtstärkeninformationen der zirkulären Diattenuation der optischen Probe (36) entsprechen.

10. Verfahren zur Messung der Diattenuation in einem optischen Element, umfassend die folgenden Schritte:

Sicherung einer optischen Elementprobe (36) in einem drehbaren Tisch (56);
Erzeugung eines polarisierten Quellenlichtstrahls (B), einschließlich Translation des Quellenlichtstrahls (B) mithilfe des ersten Linearbewegungsmittels (52) und Neigung des Quellenlichtstrahls (B) mithilfe eines ersten Neigungstischs (54);
Richten des Quellenstrahls (B) durch die Probe (36) hindurch, einschließlich Drehung der Probe (36) mithilfe des drehbaren Tischs (56);
Anordnung des aktiven Bereichs eines Detektors (42) zum Detektieren des Quellenlichtstrahls (B), nach dessen Ausbreitung durch die Probe (36) hindurch, einschließlich Translation des Detektors (42) mithilfe des zweiten Linearbewegungsmittels (58) und Neigung des Detektors (42) mithilfe eines zweiten Neigungstischs (60); und
Bestimmung, anhand des detektierten Quellenlichts, von Informationen entsprechend der Diattenuation der im Probentisch (56) gesicherten optischen Probe (36).

11. Verfahren nach Anspruch 10, worin der Anordnungsschritt den Schritt der Erzeugung, zusätzlich zum Quellenlichtstrahl (B), eines Ausrichtungsstrahls (VL) von sichtbarem Licht beinhaltet, um die Ausrichtung des Quellenlichtstrahls (B) und des Detektors (42) zu ermöglichen.

12. Verfahren nach Anspruch 10, worin der Anordnungsschritt den Schritt des Kollimierens des Quellenlichtstrahls (B) nach dessen Ausbreitung durch die Probe (36) hindurch beinhaltet.

**13.** Verfahren nach Anspruch 10, worin der Bestimmungsschritt die Bestimmung der zirkulären Diattenuation der optischen Probe (36) beinhaltet.

**Revendications**

**1.** Système de mesure d'une diatténuation dans un élément optique, comprenant :

un étage rotatif de rotation d'échantillon (56) permettant de fixer un échantillon d'élément optique (36) et d'effectuer une rotation contrôlée de l'échantillon (36) ;
un module de source de lumière (20) permettant de générer un faisceau de lumière source (B) ;
un module détecteur (40) ; le module de source de lumière (20) et le module détecteur (40) étant disposés avec l'étage de rotation d'échantillon (56) entre eux, de manière à permettre au faisceau de lumière source (B) de se propager dans un échantillon (36) quand un échantillon est fixé dans l'étage d'échantillon (56) et au module détecteur (40) ;
un moyen de déplacement linéaire (52, 58) permettant d'effectuer un déplacement linéaire contrôlé du module de source de lumière (20) et un déplacement linéaire contrôlé du module détecteur (40) ; et
un premier étage de basculement (54) permettant d'effectuer un basculement contrôlé du module de source de lumière (20), et un second étage de basculement (60) permettant d'effectuer un basculement contrôlé du module détecteur (40), de manière à faciliter la détection, par le module détecteur (40), d'une information d'intensité de lumière correspondant à la diatténuation de l'échantillon optique (36).

**2.** Système selon la revendication 1, dans lequel le module de source de lumière (20) et le module détecteur (40) comprennent chacun un modulateur photoélastique (PEM).

**3.** Système selon la revendication 1, dans lequel le module de source de lumière (20) est conçu pour générer, en plus du faisceau de lumière source (B), un faisceau d'alignement (VL) de lumière visible, de manière à faciliter l'alignement du module de lumière source (20) et du module détecteur (40).

**4.** Système selon la revendication 3, dans lequel le faisceau de lumière source (B) a une longueur d'onde d'environ 193 nanomètres.

**5.** Système selon la revendication 1, comprenant un échantillon (36) ayant une épaisseur variable amenant le faisceau de lumière source (B) à converger, et dans lequel le module détecteur (40) comprend une zone active de réception de lumière ; et
un moyen d'ouverture (66) associé au module détecteur (40) pour modifier efficacement la zone active du module détecteur (40) d'une ampleur relative à l'ampleur de la convergence provoquée par l'échantillon (36).

**6.** Système selon la revendication 1, comprenant un échantillon (36) ayant une épaisseur variable amenant le faisceau de lumière source (B) à diverger, et dans lequel le module détecteur (40) comprend une zone active de réception de lumière ; et
un moyen d'ouverture (66) associé au module détecteur (40) pour modifier efficacement la zone active du module détecteur (40) d'une ampleur relative à l'ampleur de la divergence provoquée par l'échantillon (36).

**7.** Système selon la revendication 1, comprenant un échantillon (36) ayant une épaisseur variable ; et dans lequel le module détecteur (40) comprend une zone active de réception de lumière ; et
un moyen d'ouverture (66) associé au module détecteur (40) pour modifier efficacement la zone active du module détecteur (40).

**8.** Système selon la revendication 1, comprenant un échantillon (36) ayant une épaisseur variable ; et dans lequel le module détecteur comprend une zone active de réception de lumière ; et
une lentille de collimation (64) disposée entre l'échantillon (36) et la zone active du module détecteur (40).

**9.** Système selon la revendication 1, dans lequel le faisceau de lumière source (B) est polarisé, et l'information d'intensité de lumière correspond à la diatténuation circulaire de l'échantillon optique (36).

**10.** Procédé de mesure d'une diatténuation dans un élément optique, comprenant les étapes consistant à :

fixer un échantillon d'élément optique (36) dans un étage rotatif (56) ;

générer un faisceau de lumière source polarisé (B), notamment en effectuant une translation du faisceau de lumière source (B) au moyen d'un premier moyen de déplacement linéaire (52) et en basculant le faisceau de lumière source (B) au moyen d'un premier étage de basculement (54) ;

diriger le faisceau source (B) à travers l'échantillon (36), notamment en faisant tourner l'échantillon (36) au moyen de l'étage rotatif (56) ;

configurer la zone active d'un détecteur (42) de manière à détecter le faisceau de lumière source (B) après sa propagation dans l'échantillon (36), notamment en effectuant une translation du détecteur (42) au moyen d'un second moyen de déplacement linéaire (58) et en basculant le détecteur (42) au moyen d'un second étage de basculement (60) ; et

effectuer la détermination à partir de l'information de lumière source détectée correspondant à la diatténuation de l'échantillon optique (36) fixé dans l'étage d'échantillon (56).

**11.** Procédé selon la revendication 10, dans lequel l'étape de configuration comprend l'étape consistant à générer, en plus du faisceau de lumière source (B), un faisceau d'alignement (VL) de lumière visible, de manière à faciliter l'alignement du faisceau de lumière source (B) et du détecteur (42).

**12.** Procédé selon la revendication 10, dans lequel l'étape de configuration comprend l'étape consistant à collimater le faisceau de lumière source (B) après sa propagation dans l'échantillon (36).

**13.** Procédé selon la revendication 10, dans lequel l'étape de détermination consiste à déterminer la diatténuation circulaire de l'échantillon optique (36).

**FIG. 1**

22 LIGHT SOURCE

20 SOURCE MODULE

26 COLLIMATING

24 NARROW BAND FILTER

28 POLARIZER

32 0-DEGREE PEM

FIG. 2

**20**

**52 LINEAR MOTION CONTROL**

**54 TILT MOTION CONTROL**

Z

Y X

**56 ROTATIONAL MOTION CONTROL**

**36**

**40**

**58 LINEAR MOTION CONTROL**

**60 TILT MOTION CONTROL**

**FIG. 3**

**FIG. 4**

**FIG. 5**

**B**

64  RE-COLLIMATING LENS

66  FIXED APERTURE

40 DETECTOR MODULE

**FIG. 6**

**EP 2 013 594 B1**

### Patent documents cited in the description

- US 2003227622 A
- US 5504581 A
- US 20040075834 A
- US 2003179375 A
- US 2005068531 A
- US 2004156051 A

### Non-patent literature cited in the description

- **CHENAULT D B et al.** Measurements of linear diattenuation and linear retardance spectra with a rotating sample spectropolarimeter. *Applied Optics USA,* 01 July 1993, vol. 32 (19
- **MCGUIRE J P JR et al.** Polarization aberrations. 1. Rotationally symmetric optical systems. *Applied Optics USA,* 01 August 1994, vol. 33 (22